# FASCICULE DE BREVET EUROPEEN

(11) **EP 1 681 505 B1**
(45) Date de publication et mention de la délivrance du brevet: **05.03.2008**
(21) Numéro de dépôt: 05292803.3
(22) Date de dépôt: 27.12.2005
(51) Int. Cl.: F16L 33/30

(54) **Embout de raccordement pour tube annélé et tube équipé d'un tel embout**
Anschlussstutzen für Wellrohre und Rohr mit entsprechendem Stutzen
Connecting device for corrugated pipes and pipe with such connecting device

(30) Priorité: 12.01.2005 FR 0500285
(43) Date de publication de la demande: 19.07.2006
(73) Titulaire: NOBEL PLASTIQUES, 78300 Poissy (FR)
(72) Inventeur: Paquis, Yvon, 51300 Vitry Le François (FR)
(74) Mandataire: Lavialle, Bruno François Stéphane

(56) Documents cités:
- WO-A-03/071180
- DE-A1- 10 051 272
- DE-U1- 20 113 500
- FR-A- 2 817 607
- US-A- 5 575 509
- US-A- 6 007 110
- US-B1- 6 561 550

## Description

La présente invention concerne un tube ayant une extrémité annelée pourvue d'un embout de raccordement.

### ARRIERE PLAN DE L'INVENTION

De tels tubes annelés sont généralement fabriqués en continu par extrusion (ou coextrusion dans le cas de tubes multicouches).

Pour raccorder un tube annelé à un raccord, il est connu, lors de l'extrusion, de prévoir à l'extrémité du tube annelé une zone lisse pour recevoir un raccord pourvu extérieurement de redans annulaires en dents de sapin. La réalisation de cette partie lisse sur le tube nécessite un outillage spécifique et entraîne une diminution de la vitesse d'extrusion, ce qui augmente le coût de fabrication du tube.

Il est également connu de réaliser une portion lisse à l'extrémité du tube par surmoulage d'une fourrure en matériau plastique. Là encore, ceci augmente le temps nécessaire à la fabrication du tube et le coût de celui-ci.

On aurait pu imaginer utiliser un tube aux extrémités annelées et un embout de raccordement à dents de sapin classique, tels que ceux divulgués dans les documents US-A-6,561,550 et US-A-6,007,110, pour réaliser une liaison par emmanchement à force directement dans une des extrémités annelées du tube. La fiabilité d'un tel raccordement serait toutefois à mettre en doute du fait de la propension du tube à gonfler sous pression, ce qui risquerait d'entraîner un désengagement du tube et de l'embout.

Un moyen de remédier à cet inconvénient serait de renforcer extérieurement l'extrémité du tube annelé pour limiter sa déformation. Ce renforcement peut être réalisé lors de la réalisation du tube annelé (par exemple par surmoulage d'une bague rigide), mais on retrouve alors les inconvénients précédemment cités en ce qui concerne l'allongement du temps nécessaire à la fabrication du tube et l'augmentation de son coût, ou lors du montage (par exemple par la mise en place d'un collier de serrage ou analogue) mais c'est alors le coût de montage qui serait augmenté.

### OBJET DE L'INVENTION

Un but de l'invention est de fournir un embout de raccordement qui soit emmanchable à force dans une extrémité annelée d'un tube annelé - comportant des annelures se succédant selon un pas prédéterminé et possédant un diamètre intérieur minimal et un diamètre intérieur maximal - de manière à assurer un raccordement efficace de l'embout au tube.

### BREVE DESCRIPTION DE L'INVENTION

A cet effet, on prévoit, selon l'invention un tube annelé comportant une extrémité annelée qui comporte des annelures se succédant selon un pas prédéterminé et possédant un diamètre intérieur minimal et un diamètre intérieur maximal, et qui est pourvue d'un embout de raccordement, l'embout étant constitué d'un corps tubulaire possédant une première zone pourvue extérieurement d'au moins deux redans annulaires de type dent de sapin espacés d'une distance correspondant au pas des annelures du tube et ayant un diamètre maximal supérieur au diamètre intérieur maximal du tube, la première zone ayant entre les redans un diamètre minimal supérieur au diamètre intérieur minimal du tube, et le corps comprenant une deuxième zone s'étendant immédiatement en arrière des redans pour recevoir au moins une annelure d'extrémité du tube et ayant un diamètre externe inférieur à un diamètre d'une zone de jonction des deux redans annulaires.

Ainsi, le tube annelé est fermement serré sur l'embout de raccordement et l'annelure d'extrémité vient en outre s'accrocher derrière le redan annulaire arrière. Le raccordement présente alors une résistance à l'arrachement du tube relativement importante.

D'autres caractéristiques et avantages de l'invention ressortiront à la lecture qui suit de modes de réalisation particuliers non limitatifs de l'invention.

### BREVE DESCRIPTION DES DESSINS

Il sera fait référence aux dessins annexés, parmi lesquels :
- la figure 1 représente en coupe longitudinale un embout de raccordement conforme à l'invention ;
- la figure 2 est une vue analogue à la figure 1 d'une variante de réalisation.

### DESCRIPTION DETAILLEE DE MODES DE

### REALISATION DE L'INVENTION

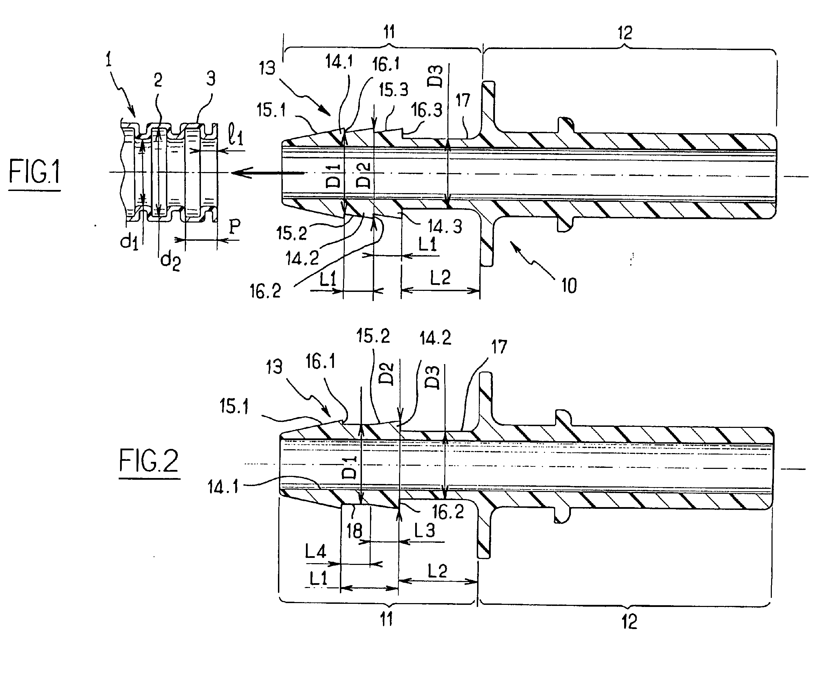

En référence à la figure 1, l'embout de raccordement conforme à l'invention est destiné à être introduit dans une extrémité annelée d'un tube annelé, généralement désigné en 1, comportant des annelures 2 se succédant selon un pas p et possédant un diamètre intérieur minimal d1 et un diamètre intérieur maximal d2.

L'embout de raccordement est constitué d'un corps, généralement désigné en 10, de forme tubulaire ayant une section généralement désignée en 11 destinée à être emmanchée à force dans l'extrémité du tube annelé 1 et une section généralement désignée en 12 destinée au raccordement de l'embout à un élément de circuit, émetteur ou récepteur de fluide, tel qu'un autre tube, un distributeur, un actionneur, une pompe, un réservoir... La section 12 est ici destinée à être encliquetée dans ledit élément et, étant connue en elle-même, n'est pas décrite plus en détail. La section 12 peut également être en une pièce avec l'élément de circuit en question.

La section 11 comprend, au voisinage de son extrémité libre, une zone généralement désignée en 13 pourvue extérieurement de redans 14 annulaires de type dent de sapin. Les redans annulaires sont ici au nombre de trois référencés 14.1, 14.2, 14.3 depuis l'extrémité libre de la section 11 en direction de la section 12.

Chaque redan annulaire 14 comprend ici une face annulaire avant 15 de forme tronconique et une face arrière radiale 16.

Les redans 14 sont séparés d'une distance L1 correspondant au pas p des annelures 2. La distance L1 est ici égale au pas p des annelures 2.

Les redans 14 ont un diamètre au sommet, ou diamètre maximal D2, qui est supérieur au diamètre maximal d2 du tube 1. Le diamètre D2 est ici déterminé pour provoquer une expansion de 30% à 40% du tube 1 afin d'obtenir une résistance à l'arrachement relativement importante. La zone 13 comporte entre deux redans successifs 14.1, 14.2 et 14.2, 14.3 une zone de jonction des redans adjacents qui présente un diamètre minimal D1 supérieur au diamètre intérieur minimal d1 du tube 1.

La section 11 du corps 10 comprend à l'arrière des redans 14, c'est-à-dire immédiatement derrière la face arrière 16.3 du redan 14.3, une zone 17 de réception de l'annelure d'extrémité 3 du tube 1. La zone 17 a ici une longueur L2 au moins égale à la largeur 1 de l'annelure d'extrémité 3 et a un diamètre externe D3 inférieur au diamètre D1 et ici voisin du diamètre intérieur minimal d1 du tube 1.

On notera qu'ainsi la face arrière 16.3 forme une marche de hauteur plus importante que celles des marches formées par les faces arrière 16.1, 16.2.

A titre d'exemple, les dimensions de la section 11 sont donnés pour un tube 1 ayant un pas de 2,8 mm, un diamètre intérieur minimal d1 de 6,2 mm et un diamètre intérieur maximal d2 de 8mm. Pour un tel tube, la distance L1 d'espacement des redans 14 est de 2,8 mm, le diamètre maximal D2 des redans 14 est de 8,6 mm, le diamètre minimal D1 de la zone 11 est de 7,8 mm, et le diamètre D3 de la zone 17 est de 6,6 mm.

L'embout est mis en place dans l'extrémité annelée du tube 1 par emmanchement à force. Après sa mise en place, le maintien de l'embout dans le tube est assuré par l'effort de serrage exercé par le tube sur l'embout, par les faces radiales 16 des redans 14 sur lesquelles viennent en butée les annelures 2 de sorte que les redans d'opposent au retrait du tube, et plus particulièrement par la surface 16.3 du redan arrière 14.3 sur laquelle vient buter l'annelure d'extrémité 3 (le diamètre D3 de la zone 17 permet à l'annelure d'extrémité 3 de mieux s'accrocher derrière le redan arrière 14.3). Le diamètre D3 étant légèrement supérieur au diamètre interne minimal d1 du tube 1, l'annelure d'extrémité 3 est légèrement serrée sur la zone 17, ce qui permet d'assurer une étanchéité tout en ayant un bon accrochage de ladite annelure sur le redan arrière 14.3.

Il n'est donc pas nécessaire de prévoir des moyens extérieurs de rigidification de l'extrémité du tube 1.

Bien entendu, l'invention n'est pas limitée au mode de réalisation décrit et on peut y apporter des variantes de réalisation sans sortir du cadre de l'invention tel que défini par les revendications.

En particulier, le diamètre D3 peut être inférieur au diamètre d1.

De plus, la zone 17 peut avoir une longueur L2 lui permettant d'accueillir une seule annelure d'extrémité ou plusieurs annelures d'extrémité.

En outre, l'embout de raccordement peut avoir d'autres formes que celle décrite et comporter par exemple un nombre différent d'annelures. Ainsi, à la figure 2 est représenté un embout de raccordement dans lequel les redans 14 sont au nombre de deux et la distance L1 séparant les redans 14 est égale à un multiple du pas p des annelures. En l'occurrence, le redan arrière 14.2 a une longueur L3 égale au pas p et est séparé du redan avant 14.1 par une zone de jonction formée d'une surface cylindrique 18 de longueur L4 égale au pas p et de diamètre D1 supérieur au diamètre intérieur minimal d1 du tube 1. La distance L1 séparant les redans 14.1, 14.2 est donc ici égale à deux fois le pas p. Ce mode de réalisation permet d'avoir un effort d'emmanchement plus faible qu'avec le mode de réalisation de la figure 1. Ce mode de réalisation est particulièrement adapté à des tubes relativement rigides ayant des annelures de forme voisine du carré alors que le mode de réalisation de la figure 1 est mieux adapté aux tubes plus souples dont les annelures sont arrondies.

## Revendications

1. Tube annelé (1) comportant une extrémité annelée qui comporte des annelures (2) se succédant selon un pas prédéterminé (p) et possédant un diamètre intérieur minimal (d1) et un diamètre intérieur maximal (d2), et qui est pourvue d'un embout de raccordement, **caractérisé en ce que** l'embout est constitué d'un corps (10) tubulaire possédant une première zone (11) pourvue extérieurement d'au moins deux redans annulaires (14) de type dent de sapin espacés d'une distance (L1) correspondant au pas des annelures du tube et ayant un diamètre maximal (D2) supérieur au diamètre intérieur maximal du tube, la première zone ayant entre les redans un diamètre minimal supérieur au diamètre intérieur minimal du tube, et **en ce que** le corps comprend une deuxième zone (17) s'étendant immédiatement en arrière des redans pour recevoir au moins une annelure d'extrémité (3) du tube et ayant un diamètre externe (D3) inférieur à un diamètre (D1) d'une zone de jonction des deux redans annulaires.

2. Tube selon la revendication 1, **caractérisé en ce que** le diamètre externe (D3) de la deuxième zone (17) est voisin du diamètre intérieur minimal (d1) du tube (1).

3. Tube selon la revendication 1, **caractérisé en ce que** la distance (L1) séparant les redans annulaires (14) est égale au pas (p) des annelures (2).

4. Tube selon la revendication 1, **caractérisé en ce que** la distance (L1) séparant les redans annulaires (14) est égale à un multiple du pas (p) des annelures (2).

5. Tube selon la revendication 1, **caractérisé en ce que** le diamètre maximal (D2) des redans annulaires (14) est déterminé pour provoquer une expansion de 30% à 40% du tube (1).

6. Tube annelé (1) ayant une extrémité annelée pourvue d'un dispositif de raccordement, **caractérisé en ce que** le dispositif de raccordement est constitué par un embout conforme à l'une quelconque des revendications précédentes.

## Claims

1. An acceleration measurement system, **characterized in that** it comprises a first cell (C1) optimized in sensitivity and a second cell (C2) optimized in passband which are mounted to deliver input signals to a servo-control loop comprising an amplifier (2) with gain (G) that is variable as a function of input signal frequency.

2. An acceleration measurement system according to claim 1, **characterized in that** the gain (G) decreases as a function of input signal frequency.

3. An acceleration measurement system according to claim 2, **characterized in that** the gain (G) has a value of 1 for a maximum frequency of the sensitivity-optimized cell (C1).

4. An acceleration measurement system according to claim 1, **characterized in that** the gain (G) is linear with a slope of -1 for frequencies greater than 1 Hz.

5. An acceleration measurement system according to claim 4, **characterized in that** the slope is -2 for a frequency less than 1 Hz.

6. An acceleration measurement system according to claim 1, **characterized in that** the sensitivity-optimized cell (C1) is connected to a positive input of a subtracter (1) upstream from the amplifier (2), and the passband-optimized cell (C2) is connected to an adder (3) downstream from the amplifier, the negative input of the subtracter (1) being connected to the output of the adder (3).

## Patentansprüche

1. Wellrohr (1), umfassend ein gewelltes Ende, das Wellen (2) aufweist, die in einer vorgegebenen Schrittweite (p) aufeinander folgen und einen minimalen Innendurchmesser (d1) und einen maximalen Innendurchmesser (d2) aufweisen, und das mit einem Anschlussstutzen versehen ist, **dadurch gekennzeichnet, dass** der Stutzen aus einem rohrförmigen Körper (10) gebildet ist, das einen ersten Bereich (11) hat, der außen mit mindestens zwei ringförmigen Vorsprüngen (14) mit Sägezahnprofil versehen ist, die zueinander einen Abstand (L1) haben, der der Schrittweite der Wellen des Rohres entspricht, sowie einen maximalen Durchmesser (D2), der größer als der maximale Innendurchmesser des Rohres ist, wobei der erste Bereich zwischen den Vorsprüngen einen minimalen Durchmesser hat, der größer als der minimale Innendurchmesser des Rohres ist, und dass der Körper einen zweiten Bereich (17) hat, der sich unmittelbar hinter den Vorsprüngen erstreckt, um mindestens eine Endwelle (3) des Rohres aufzunehmen, und der einen Außendurchmesser (D3) hat, der kleiner als ein Durchmesser (D1) eines Verbindungsbereichs zwischen zwei ringförmigen Vorsprüngen ist.

2. Rohr nach Anspruch 1, **dadurch gekennzeichnet, dass** der Außendurchmesser (D3) des zweiten Bereichs (17) nahe dem minimalen Innendurchmesser (d1) des Rohres (1) ist.

3. Rohr nach Anspruch 1, **dadurch gekennzeichnet, dass** der Abstand (L1), der die ringförmigen Vorsprünge (14) voneinander trennt, gleich der Schrittweite (p) der Wellen (2) ist.

4. Rohr nach Anspruch 1, **dadurch gekennzeichnet, dass** der Abstand (L1), der die ringförmigen Vorsprünge (14) voneinander trennt, gleich einem Vielfachen der Schrittweite (p) der Wellen (2) ist.

5. Rohr nach Anspruch 1, **dadurch gekennzeichnet, dass** der maximale Durchmesser (D2) der ringförmigen Vorsprünge (14) so festgelegt ist, dass eine Ausdehnung von 30% bis 40% des Rohres (1) bewirkt wird.

6. Wellrohr (1) mit einem gewellten Ende, das mit einer Verbindungsvorrichtung versehen ist, **dadurch gekennzeichnet, dass** die Verbindungsvorrichtung aus einem Stutzen gemäß einem der vorhergehenden Ansprüche gebildet ist.
